# EUROPÄISCHE PATENTSCHRIFT

(11) **EP 3 376 428 B1**
(45) Veröffentlichungstag und Bekanntmachung des Hinweises auf die Patenterteilung: **06.11.2019**
(21) Anmeldenummer: 18156720.7
(22) Anmeldetag: 14.02.2018
(51) Int. Cl.: G06F 21/71

(54) **VERFAHREN UND VORRICHTUNG ZUM ABSICHERN EINES GERÄTES**
METHOD AND DEVICE FOR SECURING A DEVICE
PROCÉDÉ ET DISPOSITIF DE SÉCURISATION D'UN APPAREIL

(30) Priorität: 14.03.2017 DE 102017204218
(43) Veröffentlichungstag der Anmeldung: 19.09.2018
(73) Patentinhaber: Robert Bosch GmbH, 70442 Stuttgart (DE)
(72) Erfinder: Baur, Heiko, 73037 Goeppingen (DE); Duplys, Paulius, 71706 Markgroeningen (DE)

(56) Entgegenhaltungen:
- US-A1- 2011 289 586
- XUXIAN JIANG ET AL: "RandSys: Thwarting Code Injection Attacks with System Service Interface Randomization", RELIABLE DISTRIBUTED SYSTEMS, 2007. SRDS 2007. 26TH IEEE INTERNATIONAL SYMPOSIUM ON, IEEE, PISCATAWAY, NJ, USA, 10. Oktober 2007 (2007-10-10), Seiten 209-218, XP031572964, ISBN: 978-0-7695-2995-0

## Beschreibung

Die vorliegende Erfindung betrifft ein Verfahren zum Absichern eines Gerätes. Die vorliegende Erfindung betrifft darüber hinaus eine entsprechende Vorrichtung, ein entsprechendes Computerprogramm sowie ein entsprechendes Speichermedium.

### Stand der Technik

Auf dem Gebiet der Rechnernetze und IT-Sicherheit werden als Bot-Netze größere Gruppen automatisierter Computer-Schadprogramme, sogenannter Bots, bezeichnet. Die von einem Bot-Netz umfassten Bots werden dabei auf vernetzten Rechnern ausgeführt, deren Netzwerkanbindung sowie lokale Ressourcen und Daten ihnen ohne Einverständnis des Eigentümers zur Verfügung stehen. Eine selbsttätige Verbreitung (*spreading*) der Bots erfolgt dabei in der Regel durch Schadsoftware (*malware*) unter systematischer Ausnutzung (*exploit*) etwaiger Schwachstellen (*vulnerabilities*) in Laufzeitumgebung oder Anwendungssoftware.

In US 7117371 B1 ist ein Schutzmechanismus vorgesehen, der zur Laufzeit von Anwendungsprogrammen verwendet wird. Genutzt werden hier digitale Signaturschlüssel, um sicherzustellen, dass ein ausführbarer Code, der veröffentlicht wird, eindeutig ist, da der Code mit dem öffentlichen Schlüssel eines Herausgebers veröffentlicht wird. Aufgrund der Tatsache, dass die öffentlichen Schlüssel in jeder Referenz gespeichert sind, kann ein Aufrufer sicher sein, dass der zur Laufzeit angezogene Code von demselben Herausgeber kommt, der den privaten Schlüssel besitzt.

In US 2010 0313196 A1 führt ein Installations-Framework eine Bindung durch, um einen zufällig zugewiesenen Bezeichner mit dem eindeutigen Bezeichner der Anwendung zu korrelieren. Das Installations-Framework verwaltet außerdem die Ausführung der Anwendung. Während der Ausführung kann die Anwendung in verschiedener Weise durch das Framework auf ihre dynamischen Container beschränkt werden. Das Installationsprogramm kann auch mit einer vertrauenswürdigen Betriebssystemkomponente wie dem Kernel arbeiten, um die Containerbeschränkungen durchzusetzen. Das Verfahren kann mit Code-Signaturen kombiniert werden.

EP 1687953 B1 offenbart ein Verfahren zur Authentifizierung einer Anwendung erreicht, die in einem Endgerät mit einer Laufzeitumgebung abläuft. Dabei wird ein Kryptogramm erzeugt, das einen Fingerprint der Anwendung umfasst. Die Anwendung wird bei der Ausführung durch Vergleich des aus dem empfangenen Kryptogramm herausgezogenen Fingerprints mit einem durch ein Sicherheitsmodul des Endgerätes ermittelten Fingerprint authentifiziert.

Der Stand der Technik umfasst des Weiteren die Veröffentlichung "RandSys: Thwarting Code Injection Attacks with System Service Interface Randomization" (26th IEEE International Symposium on Reliable Distributed Systems, 2007) sowie die Patentanmeldung US 2011 0289586 A1.

### Offenbarung der Erfindung

Die Erfindung stellt ein Verfahren zum Absichern eines Gerätes, eine entsprechende Vorrichtung, ein entsprechendes Computerprogramm sowie ein entsprechendes Speichermedium gemäß den unabhängigen Ansprüchen 1, 7, 8 und 9 bereit.

Der vorgeschlagene Ansatz fußt hierbei auf der Erkenntnis, dass Angriffe auf verteilte und insbesondere cyberphysische Systeme eine hochgradige Skalierbarkeit des angreifenden Bot-Netzes voraussetzen. Der Nutzen eines solchen Angriffs für den Angreifer, der sich hier in erster Linie bestehender Fernverbindungen zwischen den Zielgeräten bedient, beruht vorrangig auf seiner Fähigkeit, mit geringem Aufwand eine hohe Zahl von Geräten zu kompromittieren. Somit hängt die Machbarkeit solcher Angriffe davon ab, wie viele Geräte eine einzige Schwachstelle teilen, die durch die infizierende Malware ausgenutzt werden kann.

Ein Vorzug der erfindungsgemäßen Lösung liegt daher im verbesserten Schutz insbesondere cyberphysischer Systeme gegen Einschleusung von Schadsoftware, indem die auf einem gefährdeten Gerät installierten legitimen Laufzeitbibliotheken und Programme derart modifiziert werden, dass diese Software ausschließlich auf dem Zielgerät betrieben werden kann und das Zielgerät umgekehrt den Betrieb anderweitiger Software verweigert. Angelehnt ist diese Technik an das so genannte HTTP Public Key Pinning (HPKP) zum Absichern des HTTPS-Protokolls gegen einen Mittelsmann-Angriff (*man-in-themiddle attack*) mit gefälschten, jedoch von einer anerkannten Zertifizierungsstelle (*certificate authority*) signierten Zertifikaten.

Dieser Ansatz eliminiert im Wesentlichen jede Skalierbarkeit von softwarebasierten Angriffen, weil er es einem Angreifer unmöglich macht, Malware zu produzieren, die mehr als ein Gerät infizieren kann. Eine Ausführungsform der Erfindung erweist sich somit als besonders zur Absicherung gegen gattungsmäßige Bot-Netze geeignet. Ein etwaiger Angreifer müsste für ein erfindungsgemäß abgesichertes Gerät individuelle Malware entwickeln, was sich im Einzelfall mitunter äußerst kostspielig gestaltet.

Durch die in den abhängigen Ansprüchen aufgeführten Maßnahmen sind vorteilhafte Weiterbildungen und Verbesserungen des im unabhängigen Anspruch angegebenen Grundgedankens möglich.

### Kurze Beschreibung der Zeichnungen

Ausführungsbeispiele der Erfindung sind in den Zeichnungen dargestellt und in der nachfolgenden Beschreibung näher erläutert. Es zeigt:
Figur 1 ein Geräte-Prägungsverfahren.
Figur 2 eine Software-Verankerungsverfahren.
Figur 3 ein gemäß den erfindungsgemäßen Verfahren abgesichertes Steuergerät.

### Ausführungsformen der Erfindung

Eine bevorzugte Ausführungsform bedient sich zweier Verfahren, die im Folgenden anschaulich als Geräte-Prägung und Software-Verankerung bezeichnet werden. Typischerweise wird die Geräteprägung einmal zu Beginn des Lebenszyklus eines Gerätes durchgeführt, während die Software-Verankerung für jede neue Software und für jedes Software-Update wiederholt wird. Die beiden Verfahren werden nunmehr im Einzelnen beschrieben.

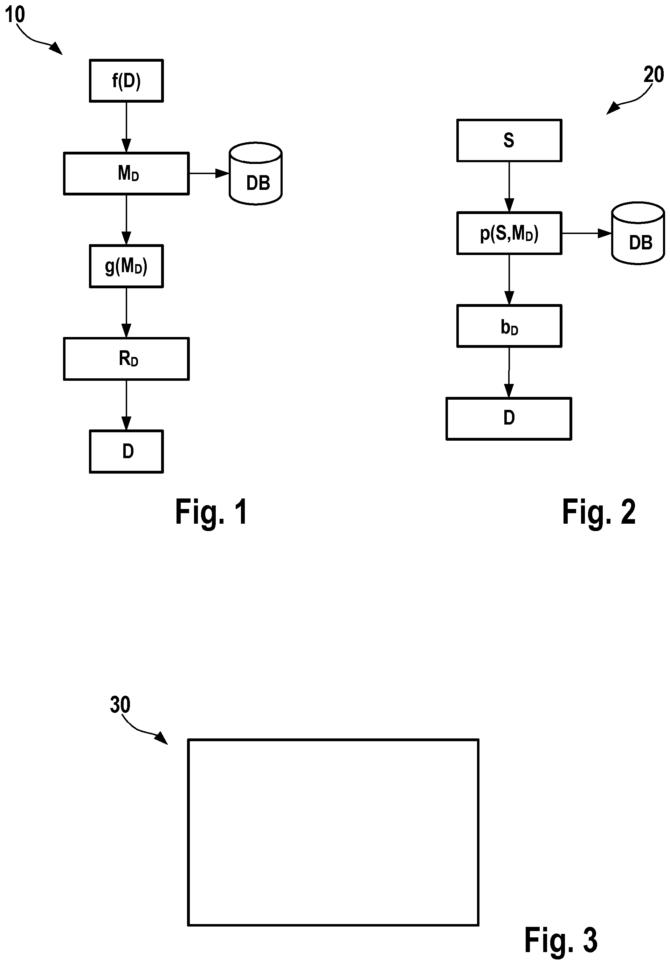

Das Geräte-Prägungsverfahren (10) ist in Figur 1 dargestellt. Eine Funktion *f* erzeugt hier eine Zuordnung zwischen einer unveränderten (*vanilla*) Laufzeitumgebung oder Bibliotheksfunktionen, die von handelsüblichen Software-Werkzeugketten (*toolchains*) und (pseudo-)zufällig erzeugten individuellen Laufzeitumgebungs- oder Bibliotheksfunktionen für ein bestimmtes Gerät D verwendet werden. Die Zuordnung wird in einer Datenbank (DB) zur späteren Verwendung gespeichert. Die Funktion *f* selbst kann eine beliebige Funktion sein (d. h. deterministisch, pseudozufällig oder wirklich zufällig), solange die von *f* erzeugte Abbildung nicht (leicht) vom Angreifer erraten werden kann. Zum Beispiel könnte *f* eine Funktion sein, die die Namen der in der Standard-C-Bibliothek enthaltenen Funktionen auf (pseudo-)zufällige Funktionsnamen abbildet.

Als nächstes wird die Zuordnung *M_{D}* als Eingabe für die Funktion g verwendet, die letztlich die individuelle Laufzeitumgebung oder Bibliotheken *R_{D}* für das Gerät *D* erzeugt. Zum Beispiel könnte *g* eine Funktion sein, die eine modifizierte Standard-C-Bibliothek ausgibt, in welcher die Standard-Funktionsnamen durch die (pseudo-)zufälligen Funktionsnamen anhand der Zuordnung *M_{D}* ersetzt werden.

Schließlich wird das Gerät *D* mit seiner individuellen Laufzeitumgebung oder Bibliothek *R_{D}* programmiert oder anderweitig eingerichtet; die Laufzeitumgebung wird ihm somit gleichsam "eingeprägt".

Das Software-Verankerungsverfahren ist in Figur 2 dargestellt. Dieses Verfahren (20) wird durchgeführt, wenn das Gerät erstmalig mit seiner Applikationssoftware programmiert wird und auch jedes Mal, wenn das Gerät in seiner vorgesehenen Betriebsumgebung mit einer neuen Software aktualisiert wird. Zuerst wird die vorgesehene Software S standardmäßig entwickelt, zum Beispiel unter Nutzung der Standard-C-Bibliothek. Als nächstes wird die Software S zusammen mit der gerätespezifischen Zuordnung *M_{D}*, die aus der Datenbank (DB) abgerufen wird, einer Funktion *p* als Eingabe zugeführt. Die Funktion *p* "verankert" sozusagen die Software *S* im Gerät *D*, d. h. die Ausgabe von *p* ist ein Binärprogramm *b_{D}*, das fest mit dem Gerät *D* verbunden ist. Beispielsweise könnte die Funktion *p* alle durch die Software *S* erfolgenden Aufrufe der Standard-C-Bibliothek anhand der Zuordnung *M_{D}* auf die entsprechenden (pseudo-)zufälligen Funktionsnamen umstellen.

Schließlich wird das Gerät *D* mit dem Binärprogramm *b_{D}* programmiert oder über eine (in Fig. 2 durch die gepunktete Linie symbolisierte) Fernverbindung aktualisiert.

Eine einfache prototypische Umsetzung dieser Ausführungsform in einer auf GNU/Linux basierenden Laufzeitumgebung könnte zum Beispiel unter Nutzung der Umgebungsvariable LD_PRELOAD erfolgen, welche das Verhalten des dynamischen Laders (*dynamic linker*, LD) beeinflusst. Erläutert sei ihr Wirkprinzip anhand des folgenden zu verankernden Anwendungsprogrammes in der Programmiersprache C oder C++:

```
 #include "stdio.h"
 int main(){
 puts("Hello World");
 }
```

In herkömmlicher Weise ließe sich dieses Anwendungsprogramm - unter der Annahme, dass es unter dem Dateinamen "test.cpp" abgespeichert wurde - etwa mittels des folgenden sogenannten Makefiles in ein Binärprogramm namens "test" umwandeln:

```
 all: test libtranslate.so
 
 test: test.cpp
 g++ test.cpp -o test
 
 libtranslate.so: translate.cpp
 g++ -c -fPIC translate.cpp -o translate.o
 g++ -shared -o libtranslate.so translate.o -ldl
 
 .PHONY: clean
 clean:
 -rm test
 -rm libtranslate.so
```

Führt man das Binärprogramm "test" aus, so gibt es die Zeichenkette "Hello World" auf der Standardausgabe aus.

Die folgende Bibliothek namens "libtranslate.so" überlädt die Funktion "puts" der Standard-C-Bibliothek derart, dass ein regulärer Aufruf das Programm beendet:

```
 #include "stdio.h"
 #include <dlfcn.h>
 #include <stdio.h>
 #include <string.h>
 #include <stdlib.h>
 
 // re-definition of puts function
 typedef int (*PFN_PUTS)(const char* str);
 static PFN_PUTS real_puts = NULL;
 
 /////////////////////////////////////////////////////
 // this function will be called in case of loading of
 // the library
 void__attach(void)__attribute__((constructor));
 void__attach(){
 real_puts = (PFN_PUTS) dlsym(RTLD_NEXT, "puts");
 }
 
 /////////////////////////////////////////////////////
 // this function overrides the glibc puts function
 // the symbol "abcd" is chosen by random
 extern "C" int abcd(const char *s){
 printf("overlay_abcd:chars#:%d\n", strlen(s));
 # now call the real glibcputs
 return real_puts(s);
 }
 
 /////////////////////////////////////////////////////
 // override the glibcfunction puts - so that it will not work anymore ...
 extern "C" int puts(const char* s){
 real_puts("... calling glibc puts - will terminate process");
 fflush(stdout);
 exit(-1);
 }
```

Hier wird in der Funktion "__attach" während der Bibliotheksinitialisierung der statischen Variable "real_puts" ein Zeiger auf die tatsächliche Funktion "puts" zugewiesen. Bei Aufruf der ursprünglichen Funktion wird das Programm verlassen, da sie wiederum die Funktion "exit (-1)" aufruft.

Führt man das Binärprogramm "test" mit vorgeladener Bibliothek "libtranslate.so" aus, so gibt es die Zeichenkette "... calling glibc puts - will terminate process" aus.

Listet man die durch das Binärprogramm "test" exportierten Symbole - bei Nutzung des ausführbaren und Ladeformates (*executable and linking format,* ELF) beispielsweise mittels des von den GNU-Binärwerkzeugen (*GNU binary utilities, binutils*) umfassten Werkzeuges "readelf" - aus, erkennt man die Zuordnung des ersten Eintrages der Symboltabelle mit dem Symbolnamen "puts@GLIBC_2.0":

```
 Symbol table '.dynsym' contains 5 entries:
 Num: Value Size Type Bind Vis Ndx Name
 ...
 1: 00000000 0 FUNC GLOBAL DEFAULT UND puts@GLIBC_2.0 (2)
 ...
```

Dieser Symbolname lässt sich durch Manipulation des ELF-Binärprogramms - beispielsweise unter Nutzung des GNU-Binärwerkzeuges "objcopy" mit dem Aufrufparameter "--redefine-sym" - in eine zufällige Zeichenfolge wie "abcd" ändern. Nach dieser Modifikation würde die folgende Ausgabe des Werkzeuges "readelf" den geänderten Verweis widerspiegeln:

```
 Symbol table '.dynsym' contains 5 entries:
 Num: Value Size Type Bind Vis Ndx Name
 ...
 1: 00000000 0 FUNC GLOBAL DEFAULT UND abcd@GLIBC_2.0 (2)
 ...
```

Es versteht sich, dass das ausführbare Programm nunmehr eine Funktion namens "abcd" von der Standard-C-Bibliothek erwartet. Die Ausführung des modifizierten Binärprogramms führt somit zu folgendem Ladefehler:

```
 ./test_patched: relocation error: ./test_patched: symbol abcd, version GLIBC_2.0
 not defined in file libc.so.6 with link time reference
```

Das derart modifizierte Binärprogramm lässt sich vielmehr nur mit der entsprechenden Übersetzungsbibliothek "libtranslate.so" ausführen, das die erforderlichen Symbole einander zuordnet. Im vorliegenden Fall veranlasst der folgende Aufruf das Binärprogramm zum korrekten Ablauf:

```
 $ LD_PRELOAD=./libtranslate.so ./test_patched
 overlay_abcd:chars#:11
 Hello World
```

Die prototypische Umsetzung löst per se nicht das Problem, dass die vom POSIX-Standard vorgesehene Funktion "dlsym" nicht für das zu schützende Programm verfügbar sein sollte. Dies lässt sich jedoch durch die Ergänzung einer weiteren LD_PRELOAD-Bibliothek erreichen, die sämtliche Funktionen dieser Art deaktiviert und nach der Bibliothek "libtranslate.so" in den Speicher zu laden ist.

Verschiedene Abwandlungen dieses Grundgedankens sind möglich. Will man ihn beispielsweise in einer Vor-Installations-Umgebung des Windows-Betriebssystems (*Windows Preinstallation Environment,* Windows PE) umsetzen, so lassen sich die Export-/lmporttabellen der Windows-PE-Binärprogramme mittels eines Softwarepaketes wie Microsoft® Detours ändern.

Bei Nutzung einer Mikrocontroller-Umgebung hingegen lassen sich die auf der vorliegenden Plattform verfügbaren Linker- und Lader-Optionen einsetzen. In Betracht kommen beispielsweise Zuordnungsdateien, die die durch Binärprogramme exportierten Symbole und deren Versatz innerhalb der jeweiligen Programmdatei enthalten.

Als verwandter Ansatz ist die Verwendung einer auf der Zielplattform verfügbaren Interpreter-Sprache zu erachten. Durch die Modifikation einer standardisierten Interpreter-Laufzeitumgebung derart, sodass sie einen gerätespezifischen Satz lexikalischer Einheiten (*tokens*) akzeptiert, ergibt sich eine individuelle Laufzeitumgebung.

Um zum Beispiel eine individuelle Interpreter-Umgebung für die Interpreter-Sprache Squirrel zu generieren, sind lediglich die Token-Liste für jedes einzelne Gerät zufällig zu mischen und individuelle Compiler-Ausgaben für jedes Gerät zu generieren.

Die Token-Liste von "squirrel" ist der folgenden Datei "sqcompiler" zu entnehmen:

```
 #define TK_IDENTIFIER 258
 #define TK_STRING_LITERAL 259
 
 #define TK_INTEGER 260
 #define TK_FLOAT 261
 #define TK_BASE 262
 #define TK_DELETE 263
 #define TK_EQ 264
 #define TK_NE 265
 #define TK_LE 266
 #define TK_GE 267
 #define TK_SWITCH 268
 #define TK_ARROW 269
 #define TK_AND 270
 #define TK_OR 271
 #define TK_IF 272
 #define TK_ELSE 273
 #define TK_WHILE 274
 #define TK_BREAK 275
 #define TK_FOR 276
 #define TK_DO 277
 #define TK_NULL 278
 #define TK_FOREACH 279
 #define TK_IN 280
 ...
 #define TK_ENUM 323
 #define TK_CONST 324
 #define TK___LINE__325
 #define TK___FUNCTION__326
 #define TK___FILE__327
```

Dieser Ansatz ist auch auf die Sprache Java sowie die Softwareplattformen .NET oder Xamarin übertragbar, soweit der vorgesehene Anwendungsfall (*use case*) die Änderung des Codes der sprachspezifischen Laufzeitumgebung erlaubt.

Besonders in einer Java-Umgebung könnte ein gerätespezifischer Klassenlader (*class loader*) verwendet werden, der vom Java Security Manager konfiguriert wurde. Dieser Klassenlader könnte den Code auf folgende Weise individualisieren:
1. Nur Klassen werden akzeptiert, die für das konkrete Gerät signiert sind.
2. Jede Klasse wird mit einem gerätespezifischen Schlüssel entschlüsselt.
3. Der Bytecode wird im Klassenladeprozess durch eine gerätespezifische Zuordnung *g*(*M_{D}*) übersetzt.

Eine ebenso denkbare hardwaremäßige Umsetzung wird durch den Umstand begünstigt, dass ein modernes Ein-Chip-System (*system on a chip,* SoC) typischerweise als VHDL-Kern beschrieben, also grundsätzlich anpassbar ist. Wenn es möglich ist, in jeder Hardware einen einzelnen Kern mit einer anderen Token-Liste für die Assembler-Opcodes oder -Mnemonics zu speichern oder anderweitig deren Konfiguration zu ermöglichen, ist es auch möglich, für jedes Gerät eine individuelle Laufzeitumgebung zu erzeugen. Sofern die Nutzungsbedingungen des VHDL-Kerns eine Veränderung des persistenten Quellkodes nicht erlauben, so kann eine Übersetzung der Symbolnamen auch dann noch erfolgen, wenn der Code auf den Datenbus geladen und dem Prozessor zugeführt wird.

Denkbar ist auch, die Assembler-Opcode-IDs auf einen externen Speicher auszulagern, der zum Beispiel werksseitig individuell konfiguriert werden kann. Dies wiederum gestattet die Bereitstellung einer kostengünstigen Hardware, die für alle Geräte einheitlich ist, aber nur gerätespezifische Binärprogramme akzeptiert. In Betracht kommt etwa die Verwendung eines sogenannten Flash-Speichers.

Die Idee lässt sich auch auf die Bytefolge von Mnemonics und eine Permutation derer Argumente übertragen.

Eine andere Variante könnte eine nicht im Betriebssystemkern erfolgende und somit nicht privilegierte (*userland*) Ablaufverfolgung (*trace*) vorsehen, die aus einem isolierten Programm erfolgende Aufrufe steuert und modifiziert.

Dieses Verfahren (10, 20) kann beispielsweise in Software oder Hardware oder in einer Mischform aus Software und Hardware beispielsweise in einem Steuergerät implementiert sein, wie die schematische Darstellung der Figur 3 verdeutlicht.

Die beschriebenen Ausführungsformen der Erfindung verhindern somit effektiv große Software-Angriffe. Die Software-Verankerung sorgt dafür, dass jedes Gerät eine einzigartige Laufzeitumgebung oder Bibliotheken hat und im Ergebnis nur eine korrekt "verankerte" Software auf diesem Gerät laufen wird. Ein Angreifer, der versucht, eine Software-Schwachstelle auszunutzen, ist somit gezwungen, ein spezifisches Schadprogramm für jedes einzelne Gerät zu erstellen. Ausgehend von der Annahme, dass der Angreifer nicht auf die Datenbank (DB) zugreifen kann, steigen die Angriffskosten auf diese Weise proportional zur Anzahl der Geräte, und der Angriff wird aus ökonomischer Sicht unattraktiv.

Der vorgeschlagene Ansatz erhöht dabei nicht den Zeitaufwand in der Entwurfsphase. Die Software kann standardmäßig (inkl. Tests etc.) entwickelt werden. Die Verankerung erfolgt quasi auf der Binärebene, sodass die Softwareentwickler nicht von der vorgeschlagenen Lösung betroffen sind.

Die erörterte Lösung kann schließlich in einer Weise verwirklicht werden, die keinen Laufzeit-Overhead der solchermaßen instrumentierten Software bedingt. Dies gilt insbesondere, wenn die oben beschriebene Umbenennung der in der Standard-C-Bibliothek enthaltenen Funktionen angewendet wird.

## Patentansprüche

1. Verfahren (10, 20) zum Absichern einer Mehrzahl von Geräten, ausgeführt von einer Vorrichtung, **gekennzeichnet durch** folgende Merkmale:
- gemäß einem von jeweils einem Gerät (*D*) der Mehrzahl der Geräten abhängigen Algorithmus (*f*(*D*)) wird jeweils eine gerätespezifische Zuordnung (*M_{D}*) festgelegt,
- die Zuordnung (*M_{D}*) wird in einer Datenbank (DB) gespeichert,
- durch eine vorgegebene erste Funktion (*g*(*M_{D}*)) wird anhand der jeweiligen Zuordnung (*M_{D}*) eine für das jeweilige Gerät (*D*) vorgesehene Laufzeitumgebung (*R_{D}*) modifiziert und
- das jeweilige Gerät (*D*) wird mit der modifizierten Laufzeitumgebung (*R_{D}*) eingerichtet,
- wobei durch eine vorgegebene zweite Funktion (*p*(*S,M_{D}*)) anhand der Zuordnung (*M_{D}*) eine für das jeweilige Gerät (*D*) vorgesehene Anwendungssoftware (*S*) in ein gerätespezifisches Binärprogramm (*b_{D}*) umgewandelt wird und
- wobei das jeweilige Gerät (*D*) mit seinem gerätespezifischen Binärprogramm (*b_{D}*) programmiert wird.

2. Verfahren (10, 20) nach Anspruch 1, **gekennzeichnet durch** folgendes Merkmal:
- durch das Programmieren des jeweiligen Gerätes (*D*) wird das Binärprogramm (*b_{D}*) aktualisiert.

3. Verfahren (10, 20) nach Anspruch 2, **gekennzeichnet durch** folgende Merkmale:
- das Aktualisieren erfolgt über eine Fernverbindung zu dem jeweiligen Gerät (*D*).

4. Verfahren (10, 20) nach einem der Ansprüche 1 bis 3,
**gekennzeichnet durch** folgendes Merkmal:
- der Algorithmus (*f*(*D*)) ist deterministisch.

5. Verfahren (10, 20) nach einem der Ansprüche 1 bis 3,
**gekennzeichnet durch** folgendes Merkmal:
- der Algorithmus (*f*(*D*)) ist nicht deterministisch.

6. Verfahren (10, 20) nach Anspruch 5,
**gekennzeichnet durch** folgendes Merkmal:
- der Algorithmus (*f*(*D*)) ist derart entworfen, dass die Zuordnung (*M_{D}*) Symbolnamen der Laufzeitumgebung (*R_{D}*) zufällig oder pseudozufällig ersetzt.

7. Computerprogramm, umfassend Befehle, die bei der Ausführung des Programms durch einen Computer diesen veranlassen, das Verfahren nach einem der Ansprüche 1 bis 6 auszuführen.

8. Maschinenlesbares Speichermedium, auf dem das Computerprogramm nach Anspruch 7 gespeichert ist.

9. Vorrichtung (30), die eingerichtet ist, das Verfahren (10, 20) nach einem der Ansprüche 1 bis 6 auszuführen.

## Claims

1. Method (10, 20) for protecting a plurality of devices, carried out by an apparatus, **characterized by** the following features:
- a device-specific assignment (M_{D}) is respectively determined according to an algorithm (f(D)) dependent on one device (D) of the plurality of devices in each case,
- the assignment (M_{D}) is stored in a database (DB),
- a runtime environment (R_{D}) provided for the respective device (D) is modified by means of a predefined first function (g(M_{D})) on the basis of the respective assignment (M_{D}), and
- the respective device (D) is configured with the modified runtime environment (R_{D}),
- wherein application software (S) provided for the respective device (D) is converted into a device-specific binary program (b_{D}) by means of a predefined second function (p(S, M_{D})) on the basis of the assignment (M_{D}), and
- wherein the respective device (D) is programmed with its device-specific binary program (b_{D}).

2. Method (10, 20) according to Claim 1, **characterized by** the following feature:
- the binary program (b_{D}) is updated by programming the respective device (D).

3. Method (10, 20) according to Claim 2, **characterized by** the following features:
- the updating is carried out via a remote connection to the respective device (D).

4. Method (10, 20) according to one of Claims 1 to 3, **characterized by** the following feature:
- the algorithm (f(D)) is deterministic.

5. Method (10, 20) according to one of Claims 1 to 3, **characterized by** the following feature:
- the algorithm (f(D)) is non-deterministic.

6. Method (10, 20) according to Claim 5, **characterized by** the following feature:
- the algorithm (f(D)) is designed in such a manner that the assignment (M_{D}) replaces symbol names of the runtime environment (R_{D}) in a random or pseudorandom manner.

7. Computer program comprising instructions which, when the program is executed by a computer, cause the latter to carry out the method according to one of Claims 1 to 6.

8. Machine-readable storage medium which stores the computer program according to Claim 7.

9. Apparatus (30) configured to carry out the method (10, 20) according to one of Claims 1 to 6.

## Revendications

1. Procédé (10, 20) de protection d'une pluralité d'appareils, mis en œuvre par un dispositif, **caractérisé par** les caractéristiques suivantes :
- une affectation (M_{D}) spécifique à l'appareil est respectivement fixée selon un algorithme (f(D)) qui dépend respectivement d'un appareil (D) de la pluralité d'appareils,
- l'affectation (M_{D}) est enregistrée dans une base de données (DB),
- un environnement d'exécution (R_{D}) prévu pour l'appareil (D) respectif est modifié par une première fonction (g(M_{D})) prédéfinie à l'aide de l'affectation (M_{D}) respective et
- l'appareil (D) respectif est configuré avec l'environnement d'exécution (R_{D}) modifié,
- un logiciel d'application (S) prévu pour l'appareil (D) respectif étant converti en un programme binaire (b_{D}) spécifique à l'appareil par une deuxième fonction (p(S, M_{D})) prédéfinie à l'aide de l'affectation (M_{D}) et
- l'appareil (D) respectif étant programmé avec son programme binaire (b_{D}) spécifique à l'appareil.

2. Procédé (10, 20) selon la revendication 1, **caractérisé par** la caractéristique suivante :
- le programme binaire (b_{D}) est actualisé par la programmation de l'appareil (D) respectif.

3. Procédé (10, 20) selon la revendication 2, **caractérisé par** les caractéristiques suivantes :
- l'actualisation s'effectue par le biais d'une connexion à distance avec l'appareil (D) respectif.

4. Procédé (10, 20) selon l'une des revendications 1 à 3, **caractérisé par** la caractéristique suivante :
- l'algorithme (f(D)) est déterministe.

5. Procédé (10, 20) selon l'une des revendications 1 à 3, **caractérisé par** la caractéristique suivante :
- l'algorithme (f(D)) est non déterministe.

6. Procédé (10, 20) selon la revendication 5, **caractérisé par** la caractéristique suivante :
- l'algorithme (f(D)) est développé de telle sorte que l'affectation (M_{D}) remplace les noms de symboles de l'environnement d'exécution (R_{D}) aléatoirement ou pseudo-aléatoirement.

7. Programme informatique, comprenant des instructions qui, lors de l'exécution du programme par un ordinateur, amènent celui-ci à mettre en œuvre le procédé selon l'une des revendications 1 à 6.

8. Support d'enregistrement lisible par machine, sur lequel est enregistré le programme informatique selon la revendication 7.

9. Dispositif (30), qui est conçu pour mettre en œuvre le procédé (10, 20) selon l'une des revendications 1 à 6.
